# FASCICULE DE BREVET EUROPEEN

(11) **EP 3 938 982 B1**
(45) Date de publication et mention de la délivrance du brevet: **01.05.2024**
(21) Numéro de dépôt: 20707142.4
(22) Date de dépôt: 05.03.2020
(51) Int. Cl.: G06Q 10/08, B65D 88/00, G06Q 10/0832, G06Q 10/0833

(54) **DISPOSITIF DE DÉTECTION ET DE GÉOLOCALISATION D'UN CONTAINER PASSÉ PAR-DESSUS BORD**
VORRICHTUNG ZUR ERFASSUNG UND GEOLOKALISIERUNG EINES ÜBER BORD GEFALLENEN CONTAINERS
DEVICE FOR DETECTING AND GEOLOCATING A CONTAINER THAT HAS FALLEN OVERBOARD

(30) Priorité: 12.03.2019 FR 1902524
(43) Date de publication de la demande: 19.01.2022
(73) Titulaire: Seatrackbox, 22400 Saint-Alban (FR)
(72) Inventeur: BARGUIRDJIAN, Pascal, 35400 SAINT-MALO (FR); BEAUVY, Alain, 22400 SAINT-ALBAN (FR); MORIN, Thibaut, 22400 SAINT-ALBAN (FR); THOMAS, Christophe, 22400 SAINT-ALBAN (FR)
(74) Mandataire: Cabinet Le Guen Maillet
(86) Numéro de dépôt international: PCT/EP2020/055837
(87) Numéro de publication internationale: WO 2020/182604

(56) Documents cités:
- CN-B- 104 819 742
- KR-A- 20100 119 995
- KR-B1- 101 258 643
- KR-B1- 101 732 971
- KR-U- 20160 001 264
- US-A1- 2012 299 776
- US-B2- 7 936 266

## Description

### DOMAINE TECHNIQUE

La présente invention concerne un dispositif de détection et de géolocalisation d'un container, ou conteneur, passé par-dessus bord lors de son transport par la voie maritime.

### ETAT DE LA TECHNIQUE ANTERIEURE

Le transport de marchandises par la voie maritime représente aujourd'hui plus de 80% des échanges mondiaux. Cependant on dénombre un nombre conséquent de pertes en mer de containers, estimé au minimum à 10 000 pertes par année.

Les causes de telles pertes sont variées et bien entendu proportionnelles au nombre de containers transportés par porte-containers, ces derniers étant de plus en plus configurés pour augmenter leur capacité de transport. Parmi les raisons à l'origine de ces pertes, les mauvaises conditions météorologiques interviennent en premier lieu. Le mauvais arrimage et l'état des porte-containers sont aussi des facteurs aggravants.

Les dangers et les conséquences de la dérive de ces containers perdus, souvent qualifiés d'OFNI (Objet Flottant Non Identifié) sont toujours extrêmement inquiétants et peuvent s'avérer sévères et graves. Les dangers plus évidents sont les collisions entre containers et navires et, bien entendu, les pollutions des fonds marins et des côtes en fonction de la toxicité des matières transportées.

Des dispositifs de géolocalisation de containers sont aujourd'hui proposés. Ils se présentent pour la plupart sous la forme de balises fixées à l'intérieur des containers et disposant de moyens pour communiquer leur position par réseau terrestre ou satellitaire, tels que des modules GPS et des émetteurs ou antennes. Beaucoup sont destinés à communiquer, outre les positions géographiques, des données telles que la température à l'intérieur des containers, leur temps de trajet ou encore le détail précis du trajet. D'autres dispositifs de géolocalisation de containers sont prévus pour être fixés à l'extérieur du container, sur une région d'une des parois.

Les dispositifs proposés ne sont pas entièrement satisfaisants en cas de chute du container par-dessus bord. En effet, selon la position dans laquelle se trouve le container dans l'eau, ces dispositifs ne se trouvent plus en mesure d'émettre leur position, l'émetteur se trouvant sous l'eau et dans l'incapacité d'émettre. De plus, dans de nombreux cas, il serait utile de recevoir les données de géolocalisation uniquement lorsque le container est passé par-dessus bord et non en continu.

Le document KR101258643B1 décrit un dispositif de géolocalisation de bateau composé d'un module électronique de géolocalisation qui se trouve dans un boîtier fixé sur la coque. Le module peut être éjecté du boîtier si le bateau coule et flotter en surface.

L'éjection se fait par l'intermédiaire d'un moyen de propulsion actionné après détection d'un changement de pression. Le module électronique flotte à la surface et est relié au boîtier par l'intermédiaire d'un câble.

Le document US20120299776 divulgue un dispositif servant à géolocaliser un bateau en cas d'avarie.

Enfin, un dispositif de détection et de géolocalisation d'un container passé par-dessus bord devrait également pouvoir être fixé à un container sans en abîmer la structure, c'est-à-dire sans perçage des parois, ni en gêner l'ouverture ou la manutention.

### EXPOSE DE L'INVENTION

Un objet de la présente invention est de proposer un dispositif de détection et de géolocalisation d'un container passé par-dessus bord lors de son transport par la voie maritime qui ne présente pas les inconvénients des dispositifs de l'état de la technique, en particulier qui permette de manière efficace et fiable de détecter la chute du container lors de son transport et sa géolocalisation, qui soit capable de communiquer des informations, en particulier de géolocalisation, durant toute la période pendant laquelle le container peut être récupéré, et qui puisse être installé sans endommager le container, ni en gêner l'ouverture ou la manutention. A cet effet, est proposé un dispositif de détection de chute et de géolocalisation d'un container passé par-dessus bord comprenant :
un boîtier électronique et un moyen de fixation amovible du boîtier électronique sur une partie extérieure du container, le boîtier électronique comprenant un moyen de détection de chute du container, une unité de commande prévue pour commander le moyen de fixation amovible en cas de détection de chute du container et désolidariser le boîtier électronique de la partie extérieure du container, un moyen de flottaison pour faire flotter ledit boîtier électronique sur un plan d'eau, un module de géolocalisation, un moyen de communication de données, un moyen d'alimentation de l'unité de commande, le dispositif comprenant de plus un moyen pour maintenir une liaison permanente entre le boitier électronique et le container lorsque le boîtier est désolidarisé du container.

Le dispositif selon l'invention est donc prévu pour être fixé sur un container destiné à être transporté par voie maritime. Grâce à son moyen de fixation amovible, et en cas de chute du container, le boîtier électronique se sépare du container et se trouve ainsi flottant à proximité du container auquel il reste attaché par un lien. Dans cet état de flottaison, le dispositif peut émettre des données et donc transmettre des données de géolocalisation (latitude ; longitude). Ainsi, quelle que soit la face du container sur laquelle il était initialement fixé, le dispositif peut émettre ses coordonnées, que cette face se retrouve submergée ou immergée n'a pas d'incidence, au contraire des dispositifs de l'état de la technique.

Avantageusement, le lien entre le boîtier électronique et le container se présente sous la forme d'un, ou plusieurs câbles de longueur prédéterminée.

Selon un premier mode de réalisation, le moyen de fixation amovible comprend deux vérins s'étendant de part et d'autre du boîtier électronique, chacun comportant une portion apte à entourer au moins partiellement une barre de serrure de la porte du container de manière à maintenir le dispositif entre deux barres de serrures, au moins un desdits vérins étant commandé par l'unité de commande alternativement pour se rétracter ou s'allonger de manière à soit maintenir le boitier entre les barres de serrure soit libérer lesdites portions de la barre de serrure. Selon ce mode de réalisation, le câble est attaché par l'une de ses extrémités à l'une desdites barres de serrures et par l'autre extrémité au boîtier électronique.

Selon un second mode de réalisation, le dispositif comprend un électro aimant fixé sur le boîtier électronique et un socle prévu pour être fixé, par collage et/ou aimantation, à une paroi du container, l'électroaimant étant commandé par l'unité de commande pour créer une attraction entre le boîtier électronique et le socle ou rompre l'attraction, formant ainsi le moyen de liaison amovible.

Selon ce mode de réalisation, le câble est attaché par l'une de ses extrémités au socle et par l'autre extrémité au boîtier électronique.

Avantageusement, le moyen de détection de chute du container comprend un accéléromètre. Préférentiellement, il s'agit d'un accéléromètre à trois axes.

Préférentiellement encore, le moyen de détection de chute du container comprend, de plus, au moins un autre capteur de paramètres tel qu'un gyroscope, un capteur inertiel, un capteur de vibrations, un capteur de vitesse, un inclinomètre, un capteur de pression, un capteur de salinité ou un capteur de liquide, ou encore la combinaison de deux ou de plusieurs desdits capteurs. Avantageusement, le moyen de détection de chute du container comprend un accéléromètre et un détecteur d'inclinaison.

Avantageusement, le moyen de communication comprend une ou plusieurs antennes, préférentiellement fixées sur le moyen de flottaison.

Selon un mode de réalisation, le moyen de flottaison est une structure gonflable qui est logée dans un état dégonflé dans ou sur le boîtier électronique et dont le gonflage est commandé par l'unité de commande.

Selon un autre mode de réalisation, le moyen de flottaison est une enveloppe ou une coque à l'intérieur de laquelle est logé le boîtier électronique.

Selon un autre mode de réalisation, le dispositif comprend un moyen pour détecter un sabotage du dispositif, préférentiellement composé d'une alarme magnétique ou d'une alarme comprenant un aimant.

L'invention concerne encore un procédé de détection de chute et de géolocalisation d'un container passé par-dessus bord à l'aide d'un dispositif tel que décrit dans l'une des revendications précédentes, le procédé comprenant les étapes suivantes :
- Installation dudit dispositif sur une partie extérieure d'un container,
- Contrôle par l'unité de commande de données d'accélération fournies par un accéléromètre et la comparaison de telles données à une valeur seuil prédéterminée,
- Détermination, par l'unité de commande, d'un état de chute du container,
- Commande par l'unité de commande de la désolidarisation du boîtier électronique de la partie extérieure du container lorsque la valeur d'accélération est supérieure à la valeur seuil prédéterminée,
- Déploiement du lien maintenant une liaison permanente entre le boitier électronique du dispositif et le container, et
- Commande par l'unité de commande d'émission des données de géolocalisation. Avantageusement, le procédé comporte, de plus, une étape de gonflage du moyen de flottaison après, ou concomitamment à, la désolidarisation du boîtier électronique de la partie extérieure du container.

Avantageusement, le procédé comporte, de plus, le contrôle par l'unité de commande de la valeur de paramètres fournis par un inclinomètre, un gyroscope, un capteur inertiel, un capteur de vibrations, un capteur de vitesse, un inclinomètre, un capteur de pression, un capteur de salinité ou un capteur de liquide, ou encore la combinaison de deux ou de plusieurs desdits capteurs, et la comparaison de telles données à une valeur prédéterminée.

Avantageusement encore, la commande par l'unité de commande de la désolidarisation du boitier électronique de la partie extérieure du container a lieu lorsque la valeur d'au moins un autre paramètre que celui d'accélération est représentative d'une chute du container. Avantageusement, le procédé comporte, de plus, une étape de détermination par l'unité de commande d'un sabotage du dispositif et une étape de commande par l'unité de commande d'émission d'une information d'alarme.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de face d'un dispositif selon un premier mode de réalisation de l'invention, installé sur un container,
[Fig. 2] est une vue de face d'un dispositif selon un second mode de réalisation de l'invention, installé sur un container,
[Fig. 3] est un schéma d'un boitier électronique d'un dispositif selon l'invention,
[Fig. 4] est une vue de profil d'un dispositif selon le premier mode de réalisation de l'invention, installé sur un container,
[Fig. 5] est une vue de profil d'un dispositif selon le premier mode de réalisation de l'invention, se détachant d'un container lors d'une chute,
[Fig. 6] est une vue de dessus d'un dispositif selon le second mode de réalisation de l'invention, installé sur un container,
[Fig. 7] est une vue de dessus d'un dispositif selon le second mode de réalisation de l'invention, se détachant d'un container lors d'une chute,
[Fig. 8] est une vue de dessus d'un dispositif selon le second mode de réalisation de l'invention, se détachant d'un container lors d'une chute,
[Fig. 9] est une vue illustrant d'un dispositif selon l'un ou l'autre des premier et second mode de réalisation flottant après une chute et,
[Fig. 10] est une vue illustrant un dispositif selon l'un ou l'autre des premier et second mode de réalisation une fois le container coulé.

### EXPOSE DETAILLE DE MODES DE REALISATION

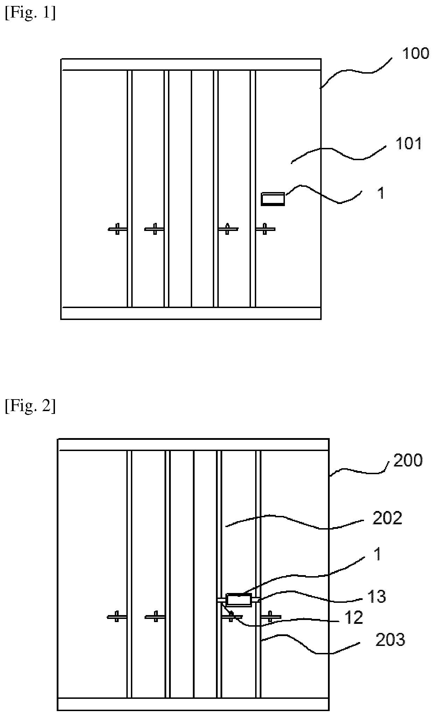

Sur les Figs. 1 et 2 sont représentés des containers 100 et 200 destinés à être transportés par voie maritime à bord d'un porte-containers. Sur chacun des containers 100 et 200 est fixé un dispositif 1 selon l'invention pour la détection d'une chute du container par-dessus bord et la géolocalisation du container.

Le dispositif 1 est ainsi destiné à détecter le passage du container par-dessus bord et sa chute en mer puis à fournir des informations d'alerte et de géolocalisation à des personnes à terre ou naviguant dans une zone maritime proche de la situation géographique du container.

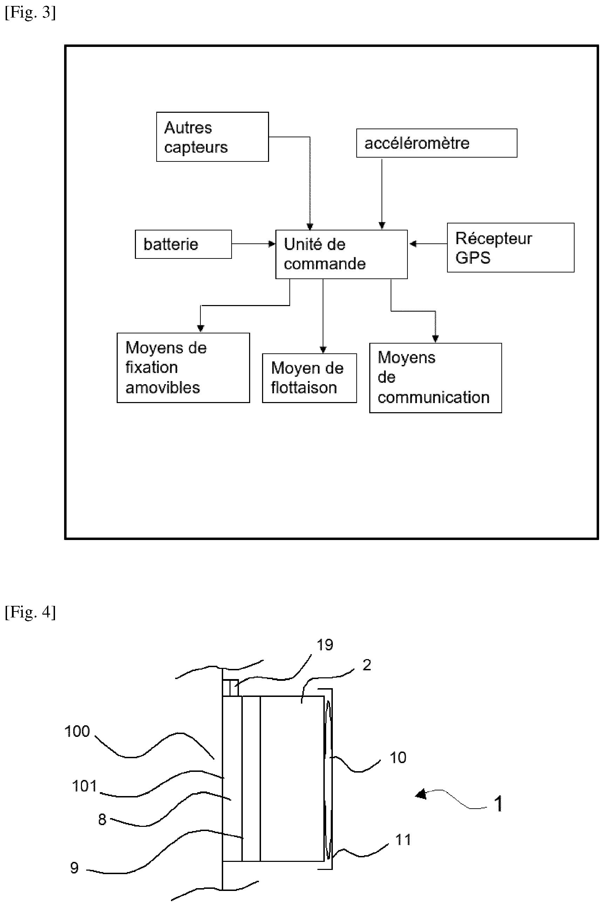

Sur la Fig. 3 est représenté un diagramme en bloc illustrant un dispositif 1 de détection de chute et de géolocalisation d'un container passé par-dessus bord tel qu'illustré sur la Fig. 1.

Le dispositif 1 comprend un boîtier électronique 2 comprenant un accéléromètre 3 qui mesure une accélération, une unité de commande 4, une batterie 5, un module de géolocalisation 6 et un moyen de communication 7 pour communiquer des données de géolocalisation.

D'autres capteurs peuvent également être prévus, tels qu'un gyroscope, un capteur inertiel, un capteur de vibrations, un capteur de vitesse, un inclinomètre, un capteur de pression, un capteur de salinité ou un capteur de liquide, ou encore la combinaison de deux ou de plusieurs desdits capteurs.

Le dispositif 1 comprend également un moyen de fixation amovible du dispositif 1 sur le container 100, ainsi qu'un moyen de flottaison prévu pour faire flotter le boîtier électronique 2 sur le plan d'eau.

L'unité de commande 4 peut être un microcontrôleur ou un microprocesseur. Elle reçoit des données d'accélération et peut détecter une accélération représentative d'une chute du container 100, 200 hors du porte container dans un plan d'eau.

L'unité de commande 4 est prévue pour commander le moyen de fixation amovible et désolidariser le dispositif 1 du container 100, 200, en cas de détection de chute du container 100. Elle commande également le moyen de flottaison prévu pour faire flotter le boîtier électronique 2 sur le plan d'eau, le système de géolocalisation 6 et le moyen de communication des données de géolocalisation 7.

Le dispositif 1 peut être installé sur n'importe quelle partie extérieure des containers 100, 200 par exemple sur une partie de la paroi 101 du container 100 (Fig.1) ou entre les barres de serrures 202, 203 du container 200 (Fig.2). Dans les deux cas, le dispositif 1 ne gêne pas la rotation des barres de serrures et n'empêche pas l'ouverture des containers 100, 200.

Le dispositif 1 se trouve ainsi fixé sur un container par un moyen de fixation amovible dont deux variantes sont illustrées sur les Figs. 4 à 8.

Ainsi à la Fig.4 est représenté un dispositif 1 selon un premier mode de réalisation de l'invention, vu de profil, dont le boîtier électronique 2 est fixé sur la paroi 101 du container 100 par l'intermédiaire d'un moyen de fixation incluant un socle 8 et un électro-aimant 9. Le socle 8 est fixé par collage ou par aimantation. Aucun perçage de la paroi 101 n'est nécessaire. L'électroaimant 9, commandé par l'unité de commande 4, maintient une attraction entre le socle 8 et le boîtier électronique 2.

Un moyen de flottaison qui est une structure gonflable 10 est fixé ou lié au dispositif 1. Cette structure gonflable 10 se trouve à l'état dégonflé et est protégée par un capot 11. Son gonflage est commandé par l'unité de commande 4.

De manière alternative, le moyen de flottaison peut être une enveloppe ou une coque de protection du boîtier électronique 2.

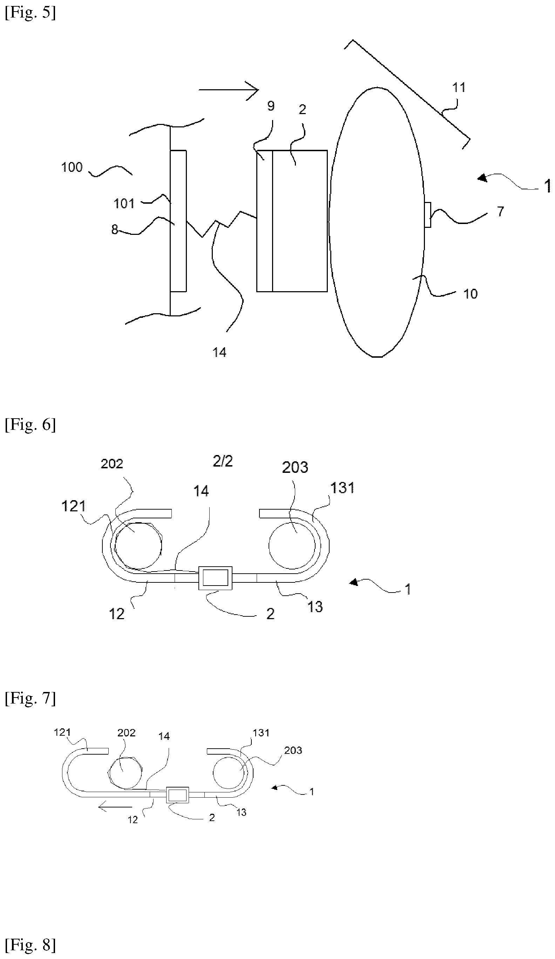

A la Fig.6 est représenté un dispositif 1 selon un second mode de réalisation de l'invention, vu du dessus, dont le boîtier électronique 2 est fixé entre les barres de serrures 202, 203 du container 200 par l'intermédiaire d'un moyen de fixation incluant des vérins 12 et 13. Chaque vérin 12, 13 comporte une portion 121, 131 apte à entourer au moins partiellement une barre de serrure 202, 203, respectivement, de la porte du container 200 de manière à maintenir le dispositif 1 entre deux barres de serrures. Au moins un des vérins 12 est commandé par l'unité de commande 4 pour se rétracter de manière à serrer la barre de serrure 202.

Le dispositif 1, selon ce mode de réalisation, comprend également une structure gonflable 10 ici à l'état dégonflé et protégée par un capot 11.

Tant qu'un container 100 ou 200 se trouve sur le porte-containers, le dispositif 1 se trouve dans un état dit de « veille », dans lequel notamment le module de géolocalisation et le moyen de communication ne sont pas actifs. Dans cet état également, l'électroaimant 9 maintient la fixation du boîtier électronique 2 sur le socle 8 du container 100 où les vérins 12 et 13 sont rétractés autour des barres de serrures 202 et 203 du container 200.

L'accéléromètre mesure en permanence les accélérations subies par le dispositif 1 et communique les données d'accélération à l'unité de commande 4.

L'accélération est de préférence mesurée selon plusieurs axes distincts. A ce titre, un accéléromètre à 3 axes est préféré.

L'unité de commande 4 compare les données d'accélération qu'elle reçoit à une valeur seuil de référence prédéterminée. Si une donnée d'accélération est supérieure à cette valeur seuil, alors l'unité de commande détecte un état de chute du container dans l'eau.

Le dispositif passe alors dans un état dit « actif ».

L'unité de commande 4 commande alors, par l'intermédiaire des moyens de fixation amovibles, la désolidarisation du boîtier électronique 2 et du container 100 ou 200.

Pour ce faire, selon le premier mode de réalisation décrit en lien avec les Figs. 4 et 5, l'attraction entre l'électroaimant 9 et le socle 8 est rompue par commande de l'unité de commande 4. Selon le second mode de réalisation décrit en lien avec les Figs. 6 à 8, le vérin 12 s'allonge par commande de l'unité de commande 4 afin de libérer la portion de la barre de serrure 202. Après, ou concomitamment à la désolidarisation du boîtier électronique 2 du container 100 ou du container 200, l'unité de commande 4 commande, par l'intermédiaire d'un percuteur, le gonflage du moyen de flottaison 10 (Figs. 5 et 8).

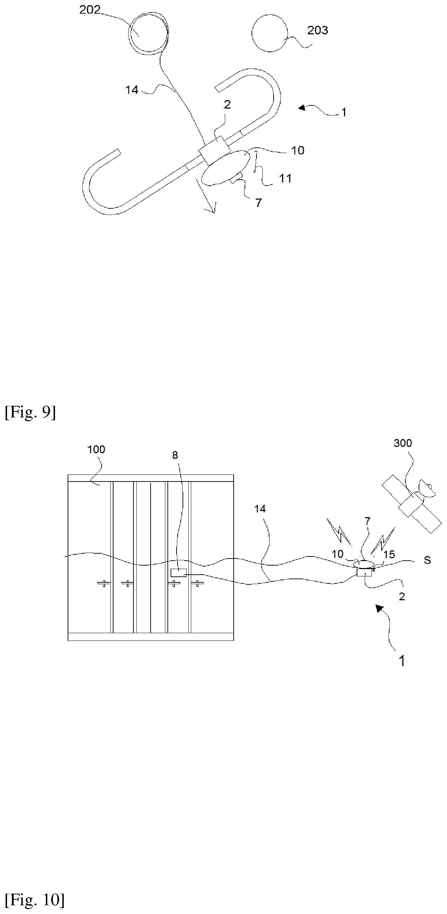

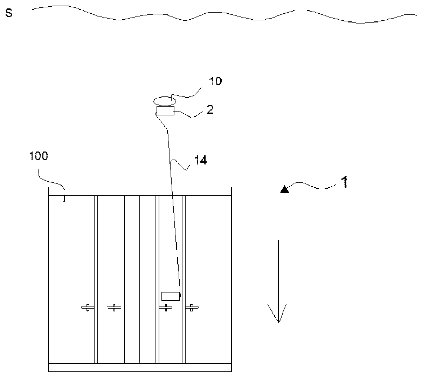

La Fig. 9 illustre un container, par exemple le container 100, passé par-dessus bord et ayant chuté dans l'eau. Le boîtier électronique 2 se retrouve donc flottant à la surface de l'eau S, à proximité du container 100.

De manière à maintenir un lien permanent entre le boîtier électronique 2 et le container 100 ou 200, un câble 14, d'une longueur prédéterminée, par exemple entre 1 et 20 mètres, est prévu pour relier les deux.

Selon le premier mode de réalisation, le câble 14 est attaché par l'une de ses extrémités au socle 8 et par l'autre extrémité au boîtier électronique 2 (Fig. 5).

Selon le second mode de réalisation, le câble 14 est attaché par l'une de ses extrémités à l'une des barres de serrures 202, 203 et par l'autre extrémité au boîtier électronique 2 (Fig. 8).

Le boîtier électronique 2 flotte donc à la surface de l'eau grâce au moyen de flottaison 10 et se trouve relié au container 100 par le câble 14 (Fig. 9).

Après, ou concomitamment à la désolidarisation du boîtier électronique 2 du container 100 ou 200, et au gonflage du moyen de flottaison 10, l'unité de commande 4 commande le module de géolocalisation 6, la réception de données de géolocalisation par l'intermédiaire d'un récepteur GPS et la transmission de ces informations par le moyen de communication 7 à terre ou à des engins maritimes se déplaçant essentiellement dans la même zone géographique.

Le récepteur GPS et le moyen de communication 7 sont avantageusement un même moyen, par exemple une ou plusieurs antennes 7.

Selon l'invention, les antennes 7 se trouvent situées sur une partie du dispositif 1 qui n'est pas submergée. Elles peuvent être placées sur le moyen de flottaison 10 ou encore dans la partie du boîtier électronique 2 qui se trouve en vis-à-vis du moyen de flottaison.

Les antennes 7 communiquent par réseau cellulaire et/ou satellite 300, notamment IRIDIUM, GLONASS ou GALILEO.

Dans le mode de réalisation illustré à la Fig. 9, on note que le socle 8 se trouve submergé de sorte que si le boîtier électronique 2 ne s'était pas désolidarisé du socle 8, il ne pourrait pas transmettre ses données de géolocalisation, étant lui-même submergé.

La transmission des données de géolocalisation a lieu en continu ou à intervalles réguliers, par exemple tous les quarts d'heure.

Outre les informations de géolocalisation, le moyen de communication peut transmettre d'autres informations telles que l'identification du container, par l'intermédiaire d'un code d'identification préenregistré, ou le niveau de charge de la batterie.

D'autres capteurs de paramètres peuvent être prévus de manière à conforter ou confirmer la chute du container 100, 200 dans l'eau (Fig. 3). Dans ce cas, les données obtenues de ces capteurs peuvent être utilisées, en plus de celles de l'accéléromètre, par l'unité de commande pour détecter l'état de chute du container dans l'eau et faire passer le dispositif dans son état dit « actif » dans lequel il se sépare du container et transmet sa localisation.

Le capteur d'inclinaison, tel qu'un gyromètre, peut notamment être utilisé pour mesurer l'inclinaison que subit le dispositif par rapport à la ligne d'horizon lors de la chute du container. Dans ce cas, l'unité de commande détectera un état de chute dans l'eau en fonction des valeurs mesurées à la fois par l'accéléromètre et le capteur d'inclinaison, c'est-à-dire une accélération et un ou plusieurs angles supérieurs à des valeurs seuils prédéterminées.

Un capteur gyromètre peut également servir aussi à confirmer que le container subit du roulis ou du tangage. Ce mode de réalisation peut être utile par exemple pour distinguer une chute du container à terre et non en mer. Lorsque le container chute à terre, par exemple à quai lors de la manutention, il subit une accélération mais se retrouve dans un état de stabilité, et ne subit plus de roulis ni de tangage. Dans ce cas, l'accéléromètre va effectivement mesurer une accélération supérieure à la valeur seuil prédéterminée et représentative d'une chute. Cependant, les données obtenues du gyromètre n'étant pas représentatives de roulis ou de tangage, l'unité de commande ne détectera pas un état de chute du container dans l'eau et ne commandera pas la désolidarisation du boîtier électronique de la partie extérieure du container, ni le gonflage du moyen de flottaison, ni le module de géolocalisation.

Un détecteur de liquide peut également être utilisé en complément de l'accéléromètre pour confirmer que le container est dans l'eau. Il s'agira d'un détecteur de liquide basé sur une sonde capacitive. Il permettra de mesurer avec précision un niveau de liquide. Dans ce cas, l'unité de commande détectera un état de chute dans l'eau en fonction des valeurs mesurées à la fois par l'accéléromètre et le détecteur de liquide, c'est-à-dire une accélération et un niveau de liquide supérieurs à des valeurs seuils prédéterminées.

Un capteur de vitesse peut aussi être utilisé de manière à connaître la vitesse à laquelle le container dérive. Dans ce cas, les données de vitesse ne sont pas prises en compte par l'unité de commande pour détecter un état de chute, mais elles sont transmises en même temps que les données de géolocalisation.

Le dispositif est pourvu d'une batterie 5, rechargeable, disposant d'une autonomie de plusieurs jours, par exemple jusqu'à 15 jours. Des cellules photovoltaïques peuvent être prévues sur le dispositif 1 de manière à recharger la batterie 5.

Le dispositif 1 peut comprendre, de plus, un système d'émission de lumière, notamment par flash lumineux 15, de manière à faciliter son repérage.

Enfin, le dispositif 1 peut comprendre, de plus, un système d'identification automatique (AIS ou SIA), de manière à communiquer des messages à des navires incluant la position, l'identification et le statut du container. Ce système est commandé par l'unité de commande 4 dès que le container est à l'eau. Le système AIS ou SIA comporte des émetteurs qui seront avantageusement positionnés à proximité des antennes 7.

Le container 100 peut dériver et flotter durant plusieurs semaines. Durant tout cet intervalle de temps, le dispositif 1 va émettre les données de géolocalisation de manière à permettre la récupération du container. A la suite de ces quelques semaines, le container 100 va couler et entraîner avec lui vers le fond le boîtier électronique 2 qui cessera d'émettre (Fig. 10).

Selon un mode de réalisation de l'invention, le dispositif 1 peut inclure un moyen de détection d'un sabotage pour détecter le cas où un individu séparerait de force le dispositif 1 du container 100 ou 200. Il s'agira d'une alarme magnétique 19 selon laquelle un champ magnétique est créé entre le boitier électronique 2 et le container 100 (Fig. 4). Si le champ magnétique est rompu alors l'information est détectée par l'unité de commande 4 laquelle va commander l'émission d'une information d'alerte. De manière alternative, l'alarme peut être filaire ou composé d'un aimant.

## Revendications

1. Dispositif (1) de détection de chute et de géolocalisation d'un container (100, 200) passé par-dessus bord comprenant :
un boîtier électronique (2) et un moyen de fixation amovible du boîtier électronique sur une partie extérieure du container, le boîtier électronique (2) comprenant un moyen de détection de chute du container, une unité de commande (4) prévue pour commander le moyen de fixation amovible en cas de détection de chute du container et désolidariser le boîtier électronique (2) de la partie extérieure du container, un moyen de flottaison (10) pour faire flotter ledit boîtier électronique sur un plan d'eau, un module de géolocalisation (6), un moyen de communication de données (7), un moyen d'alimentation (2) de l'unité de commande (4), le dispositif (1) comprenant de plus un lien pour maintenir une liaison permanente entre le boîtier électronique (2) et le container (100, 200) lorsque le boîtier est désolidarisé du container, le moyen de fixation amovible comprenant deux vérins (12, 13) s'étendant de part et d'autre du boîtier électronique (2), chacun comportant une portion (121, 131) apte à entourer au moins partiellement une barre de serrure (202, 203) de la porte du container de manière à maintenir le dispositif (1) entre deux barres de serrures, au moins un desdits vérins (12) étant commandé par l'unité de commande (4) alternativement pour se rétracter ou s'allonger de manière à soit maintenir le boîtier entre deux barres de serrures soit, libérer lesdites portions (121, 131) de la barre de serrure.

2. Dispositif (1) de détection de chute et de géolocalisation d'un container (100, 200) passé par-dessus bord comprenant :
un boîtier électronique (2) et un moyen de fixation amovible du boîtier électronique sur une partie extérieure du container, le boîtier électronique (2) comprenant un moyen de détection de chute du container, une unité de commande (4) prévue pour commander le moyen de fixation amovible en cas de détection de chute du container et désolidariser le boîtier électronique (2) de la partie extérieure du container, un moyen de flottaison (10) pour faire flotter ledit boîtier électronique sur un plan d'eau, un module de géolocalisation (6), un moyen de communication de données (7), un moyen d'alimentation (2) de l'unité de commande (4), le dispositif (1) comprenant de plus un lien pour maintenir une liaison permanente entre le boîtier électronique (2) et le container (100, 200) lorsque le boîtier est désolidarisé du container, le dispositif comprenant un électroaimant (9) fixé sur le boîtier électronique (2) et un socle (8) prévu pour être fixé, par collage et/ou aimantation, à une paroi du container (100), l'électroaimant (9) étant commandé par l'unité de commande (4) pour créer une attraction entre le boîtier électronique (2) et le socle (8) ou rompre l'attraction, formant ainsi le moyen de liaison amovible.

3. Dispositif (1) selon la revendication 1 ou 2, **caractérisé en ce que** le lien entre le boîtier électronique (2) et le container (100, 200) se présente sous la forme d'un, ou plusieurs câbles (14) de longueur prédéterminée.

4. Dispositif (1) selon la revendication 1, **caractérisé en ce que** ledit câble (14) est attaché par l'une de ses extrémités à l'une desdites barres de serrures (202, 203) et par l'autre extrémité au boîtier électronique (2).

5. Dispositif (1) selon la revendication 2, **caractérisé en ce que** ledit câble (14) est attaché par l'une de ses extrémités au socle (8) et par l'autre extrémité au boîtier électronique (2).

6. Dispositif (1) selon l'une des revendications précédentes, **caractérisé en ce que** le moyen de détection de chute du container comprend un accéléromètre (3).

7. Dispositif (1) selon la revendication 6, **caractérisé en ce que** le moyen de détection de chute du container comprend, de plus, au moins un autre capteur de paramètres tel qu'un gyroscope, un capteur inertiel, un capteur de vibrations, un capteur de vitesse, un inclinomètre, un capteur de pression, un capteur de salinité ou un capteur de liquide, ou encore la combinaison de deux ou de plusieurs desdits capteurs.

8. Dispositif (1) selon l'une des revendications 6 et 7, **caractérisé en ce que** le moyen de détection de chute du container comprend un accéléromètre (3) et un détecteur d'inclinaison.

9. Dispositif (1) selon l'une des revendications précédentes, **caractérisé en ce que** le moyen de communication (7) comprend une ou plusieurs antennes, préférentiellement fixées sur le moyen de flottaison (10).

10. Dispositif (1) selon l'une des revendications précédentes, **caractérisé en ce que** le moyen de flottaison est une structure gonflable qui est logée dans un état dégonflé dans ou sur le boîtier électronique (2) et dont le gonflement est commandé par l'unité de commande (4).

11. Dispositif (1) selon l'une des revendications précédentes, **caractérisé en ce que** le moyen de flottaison (10) est une enveloppe ou une coque à l'intérieur de laquelle est logé le boîtier électronique (2).

12. Dispositif (1) selon l'une des revendications précédentes, **caractérisé en ce que** le dispositif comprend un moyen pour détecter un sabotage du dispositif, préférentiellement composé d'une alarme magnétique (19) ou d'une alarme comprenant un aimant.

13. Procédé de détection de chute et de géolocalisation d'un container (100, 200) passé par-dessus bord à l'aide d'un dispositif (1) tel que décrit dans l'une des revendications précédentes, le procédé comprenant les étapes suivantes :
Installation dudit dispositif (1) sur une partie extérieure d'un container,
Contrôle par une unité de commande (4) de données d'accélération fournies par un accéléromètre (3) et la comparaison de telles données à une valeur seuil prédéterminée, Détermination, par l'unité de commande (4), d'un état de chute du container,
Commande par l'unité de commande 4) de la désolidarisation du boîtier électronique (2) de la partie extérieure du container lorsque la valeur d'accélération est supérieure à la valeur seuil prédéterminée,
Déploiement d'un lien maintenant une liaison permanente entre le boîtier électronique (2) du dispositif (1) et le container, et
Commande par l'unité de commande (4) d'émission des données de géolocalisation.

14. Procédé selon la revendication 13, **caractérisé en ce qu'**il comporte, de plus, une étape de gonflage du moyen de flottaison (10) après, ou concomitamment à la désolidarisation du boîtier électronique (2) de la partie extérieure du container.

15. Procédé selon la revendication 14 ou 15, **caractérisé en ce qu'**il comporte, de plus, le contrôle par l'unité de commande (4) de la valeur de paramètres fournis par un inclinomètre, un gyroscope, un capteur inertiel, un capteur de vibrations, un capteur de vitesse, un inclinomètre, un capteur de pression, un capteur de salinité ou un capteur de liquide, ou encore la combinaison de deux ou de plusieurs desdits capteurs, et la comparaison de telles données à une valeur prédéterminée.

16. Procédé selon la revendication 15, **caractérisé en ce que** la commande par l'unité de commande de la désolidarisation du boîtier électronique (2) de la partie extérieure du container a lieu lorsque la valeur d'au moins un autre paramètre que celui d'accélération est représentative d'une chute du container.

17. Procédé selon l'une des revendications 14 à 16, **caractérisé en ce qu'**il comporte une étape de détermination par l'unité de commande (4) d'un sabotage du dispositif et une étape de commande par l'unité de commande (4) d'émission d'une information d'alarme.

## Patentansprüche

1. Vorrichtung (1) zur Falldetektion und zur Geolokalisierung eines über Bord gegangenen Containers (100, 200), umfassend:
eine Elektronikbox (2) und ein Mittel zur lösbaren Befestigung der Elektronikbox an einem Außenteil des Containers, wobei die Elektronikbox (2) Folgendes umfasst: ein Mittel zur Falldetektion des Containers,
eine Steuereinheit (4), die dazu vorgesehen ist, das Mittel zur lösbaren Befestigung im Falle einer Falldetektion des Containers zu steuern und die Elektronikbox (2) vom Außenteil des Containers zu trennen, ein Schwimmmittel (10), um die Elektronikbox auf einer Wasserfläche schwimmen zu lassen, ein Geolokalisierungsmodul (6), ein Datenkommunikationsmittel (7) und ein Mittel (2) zur Versorgung der Steuereinheit (4), wobei die Vorrichtung (1) außerdem eine Verknüpfung umfasst, um eine dauerhafte Verbindung zwischen der Elektronikbox (2) und dem Container (100, 200) aufrechtzuerhalten, wenn die Box vom Mittel zur lösbaren Befestigung getrennt ist, umfassend zwei Zylinder (12, 13), die sich auf beiden Seiten der Elektronikbox (2) erstrecken, wobei jeder einen Abschnitt (121, 131) aufweist, der eine Schlossstange (202, 203) der Containertür zumindest teilweise umschließen kann, um die Vorrichtung (1) zwischen zwei Schlossstangen zu halten,
wobei mindestens einer der Zylinder (12) durch die Steuereinheit (4) gesteuert wird, um sich alternativ einzuziehen oder zu verlängern, um entweder die Box zwischen zwei Schlossstangen zu halten oder die Abschnitte (121, 131) von der Schlossstange freizugeben.

2. Vorrichtung (1) zur Falldetektion und zur Geolokalisierung eines über Bord gegangenen Containers (100, 200), umfassend:
eine Elektronikbox (2) und ein Mittel zur lösbaren Befestigung der Elektronikbox an einem Außenteil des Containers, wobei die Elektronikbox (2) Folgendes umfasst: ein Mittel zur Falldetektion des Containers,
eine Steuereinheit (4), die dazu vorgesehen ist, das Mittel zur lösbaren Befestigung im Falle einer Falldetektion des Containers zu steuern und die Elektronikbox (2) vom Außenteil des Containers zu trennen, ein Schwimmmittel (10), um die Elektronikbox auf einer Wasserfläche schwimmen zu lassen, ein Geolokalisierungsmodul (6), ein Datenkommunikationsmittel (7) und ein Mittel (2) zur Versorgung der Steuereinheit (4), wobei die Vorrichtung (1) außerdem eine Verknüpfung umfasst, um eine dauerhafte Verbindung zwischen der Elektronikbox (2) und dem Container (100, 200) aufrechtzuerhalten, wenn die Box vom Container getrennt ist, wobei die Vorrichtung einen an der Elektronikbox (2) befestigten Elektromagneten (9) und einen Sockel (8) umfasst, der dazu vorgesehen ist, durch Kleben und/oder Magnetisieren an einer Wand des Containers (100) befestigt zu sein, wobei der Elektromagnet (9) durch die Steuereinheit (4) gesteuert wird, um eine Anziehung zwischen der Elektronikbox (2) und dem Sockel (8) zu erzeugen oder die Anziehung zu unterbrechen und so das Mittel zur lösbaren Verbindung zu bilden.

3. Vorrichtung (1) nach Anspruch 1 oder 2, **dadurch gekennzeichnet, dass** die Verknüpfung zwischen der Elektronikbox (2) und dem Container (100, 200) die Form eines oder mehrerer Kabel (14) mit vorbestimmter Länge aufweist.

4. Vorrichtung (1) nach Anspruch 1, **dadurch gekennzeichnet, dass** das Kabel (14) mit einem seiner Enden an einer der Schlossstangen (202, 203) und mit dem anderen Ende an der Elektronikbox (2) befestigt ist.

5. Vorrichtung (1) nach Anspruch 2, **dadurch gekennzeichnet, dass** das Kabel (14) mit einem seiner Enden am Sockel (8) und mit dem anderen Ende an der Elektronikbox (2) befestigt ist.

6. Vorrichtung (1) nach einem der vorangehenden Ansprüche, **dadurch gekennzeichnet, dass** das Mittel zur Falldetektion des Containers einen Beschleunigungsmesser (3) umfasst.

7. Vorrichtung (1) nach Anspruch 6, **dadurch gekennzeichnet, dass** das Mittel zur Falldetektion des Containers außerdem mindestens einen weiteren Parametersensor wie ein Gyroskop, einen Trägheitssensor, einen Vibrationssensor, einen Geschwindigkeitssensor, einen Neigungsmesser, einen Drucksensor, einen Salzgehaltsensor oder einen Flüssigkeitssensor oder eine Kombination von zwei oder mehr dieser Sensoren umfasst.

8. Vorrichtung (1) nach einem der Ansprüche 6 und 7, **dadurch gekennzeichnet, dass** das Mittel zur Falldetektion des Containers einen Beschleunigungsmesser (3) und einen Neigungsdetektor umfasst.

9. Vorrichtung (1) nach einem der vorangehenden Ansprüche, **dadurch gekennzeichnet, dass** das Kommunikationsmittel (7) eine oder mehrere Antennen umfasst, die vorzugsweise am Schwimmmittel (10) befestigt sind.

10. Vorrichtung (1) nach einem der vorangehenden Ansprüche, **dadurch gekennzeichnet, dass** das Schwimmmittel eine aufblasbare Struktur ist, die in einem unaufgeblasenen Zustand in oder an der Elektronikbox (2) angeordnet ist und deren Aufblasen durch die Steuereinheit (4) gesteuert wird.

11. Vorrichtung (1) nach einem der vorangehenden Ansprüche, **dadurch gekennzeichnet, dass** das Schwimmmittel (10) eine Hülle oder eine Schale ist, in der die Elektronikbox (2) angeordnet ist.

12. Vorrichtung (1) nach einem der vorangehenden Ansprüche, **dadurch gekennzeichnet, dass** die Vorrichtung ein Mittel zum Detektieren einer Sabotage der Vorrichtung umfasst, das vorzugsweise aus einem magnetischen Alarm (19) oder einem Alarm, der einen Magneten umfasst, gebildet ist.

13. Verfahren zur Falldetektion und zur Geolokalisierung eines über Bord gegangenen Containers (100, 200) mit Hilfe einer Vorrichtung (1), wie sie in einem der vorangehenden Ansprüche beschrieben ist, wobei das Verfahren die folgenden Schritte umfasst:
Installieren der Vorrichtung (1) an einem Außenteil eines Containers,
Kontrollieren von Beschleunigungsdaten, die von einem Beschleunigungsmesser (3) geliefert werden, durch eine Steuereinheit (4) und Vergleichen dieser Daten mit einem vorbestimmten Schwellenwert,
Bestimmen eines Fallzustands des Containers durch die Steuereinheit (4),
Steuern der Trennung der Elektronikbox (2) vom Außenteil des Containers durch die Steuereinheit (4), wenn der Beschleunigungswert über dem vorbestimmten Schwellenwert liegt,
Einrichten einer Verknüpfung, die eine dauerhafte Verbindung zwischen der Elektronikbox (2) der Vorrichtung (1) und dem Container aufrechterhält, und
durch die Steuereinheit (4) Steuern der Ausgabe von Geolokalisierungsdaten.

14. Verfahren nach Anspruch 13, **dadurch gekennzeichnet, dass** es außerdem einen Schritt des Aufblasens des Schwimmmittels (10) nach oder während der Abtrennung der Elektronikbox (2) vom Außenteil des Containers umfasst.

15. Verfahren nach Anspruch 14 oder 15, **dadurch gekennzeichnet, dass** es außerdem Folgendes umfasst: Kontrollieren des Wertes von Parametern durch die Steuereinheit (4), die von einem Gyroskop, einem Trägheitssensor, einem Vibrationssensor, einem Geschwindigkeitssensor, einem Neigungsmesser, einem Drucksensor, einem Salzgehaltsensor oder einem Flüssigkeitssensor oder einer Kombination von zwei oder mehr dieser Sensoren geliefert werden, und Vergleichen der Daten mit einem vorbestimmten Wert.

16. Verfahren nach Anspruch 15, **dadurch gekennzeichnet, dass** die Steuerung der Abtrennung der Elektronikbox (2) vom Außenteil des Containers durch die Steuereinheit erfolgt, wenn der Wert mindestens eines anderen Parameters als der Beschleunigung einen Fall des Containers anzeigt.

17. Verfahren nach einem der Ansprüche 14 bis 16, **dadurch gekennzeichnet, dass** es einen Schritt des Feststellens einer Sabotage der Vorrichtung durch die Steuereinheit (4) und einen Schritt des Steuerns der Ausgabe einer Alarminformation durch die Steuereinheit (4) umfasst.

## Claims

1. Device (1) for detecting a fall of and for geolocating a container (100, 200) that has gone overboard, comprising:
an electronic box (2) and a means for removably attaching the electronic box to an external part of the container, the electronic box (2) comprising a means for detecting the fall of the container, a control unit (4) designed to control the removable attachment means in the event of a fall of the container being detected and disconnecting the electronic box (2) from the external part of the container, a flotation means (10) for making said electronic box float on a stretch of water, a geolocation module (6), a data communication means (7), and a means (2) for powering the control unit (4), the device (1) also comprising a tie for maintaining a permanent connection between the electronic box (2) and the container (100, 200) when the box is disconnected from the container, the removable attachment means comprising two jacks (12, 13) extending on either side of the electronic box (2), each comprising a portion (121, 131) able to at least partially surround a locking bar (202, 203) of the container door so as to hold the device (1) between two locking bars, at least one of said jacks (12) being controlled by the control unit (4) alternately to retract or elongate so as either to hold the box between the locking bars or to release said portions (121, 131) of the locking bar.

2. Device (1) for detecting a fall of and for geolocating a container (100, 200) that has gone overboard, comprising:
an electronic box (2) and a means for removably attaching the electronic box to an external part of the container, the electronic box (2) comprising a means for detecting the fall of the container, a control unit (4) designed to control the removable attachment means in the event of a fall of the container being detected and disconnecting the electronic box (2) from the external part of the container, a flotation means (10) for making said electronic box float on a stretch of water, a geolocation module (6), a data communication means (7), and a means (2) for powering the control unit (4), the device (1) also comprising a tie for maintaining a permanent connection between the electronic box (2) and the container (100, 200) when the box is disconnected from the container, the device comprising an electromagnet (9) attached to the electronic box (2) and a base (8) designed to be attached, by gluing and/or magnetisation, to a wall of the container (100), the electromagnet (9) being controlled by the control unit (4) to create an attraction between the electronic box (2) and the base (8) or to break the attraction, thus forming the removable connection means.

3. Device (1) according to claim 1 or 2, **characterised in that** the tie between the electronic box (2) and the container (100, 200) is in the form of one or more cables (14) of predetermined length.

4. Device (1) according to claim 1, **characterised in that** said cable (14) is attached by one of the ends thereof to one of said locking bars (202, 203) and by the other end to the electronic box (2).

5. Device (1) according to claim 2, **characterised in that** said cable (14) is attached by one of the ends thereof to the base (8) and by the other end to the electronic box (2).

6. Device (1) according to one of the preceding claims, **characterised in that** the means for detecting the fall of the container comprises an accelerometer (3).

7. Device (1) according to claim 6, **characterised in that** the means for detecting the fall of the container also comprises at least one other parameter sensor such as a gyroscope, an inertial sensor, a vibration sensor, a speed sensor, an inclinometer, a pressure sensor, a salinity sensor or a liquid sensor, or the combination of two or more of said sensors.

8. Device (1) according to one of claims 6 and 7, **characterised in that** the means for detecting a fall of the container comprises an accelerometer (3) and an inclination detector.

9. Device (1) according to one of the preceding claims, **characterised in that** the communication means (7) comprises one or more antennas, preferentially attached to the flotation means (10).

10. Device (1) according to one of the preceding claims, **characterised in that** the flotation means is an inflatable structure that is housed in a deflated state in or on the electronic box (2) and the inflation of which is controlled by the control unit (4).

11. Device (1) according to one of the preceding claims, **characterised in that** the flotation means (10) is a casing or a shell inside which the electronic box (2) is housed.

12. Device (1) according to one of the preceding claims, **characterised in that** the device comprises a means for detecting sabotage of the device, preferentially composed of a magnetic alarm (19) or an alarm comprising a magnet.

13. Method for detecting a fall of and for geolocating a container (100, 200) that has gone overboard by means of a device (1) as described in one of the preceding claims, the method comprising the following steps:
installing said device (1) on an external part of a container, monitoring, by the control unit (4), acceleration data supplied by an accelerometer (3) and comparing such data with a predetermined threshold value,
determining, by the control unit (4), a state of fall of the container, controlling, by the control unit (4), the disconnection of the electronic box (2) from the external part of the container when the acceleration value is above the predetermined threshold value,
deploying a tie maintaining a permanent connection between the electronic box (2) of the device (1) and the container, and
controlling, by the control unit (4), the sending of the geolocation data.

14. Method according to claim 13, **characterised in that** it also comprises a step of inflating the flotation means (10) after, or concomitantly with, the disconnection of the electronic box (2) from the external part of the container.

15. Method according to claim 14 or 15, **characterised in that** it also comprises monitoring, by the control unit (4), the value of parameters supplied by an inclinometer, a gyroscope, an inertial sensor, a vibration sensor, a speed sensor, an inclinometer, a pressure sensor, a salinity sensor or a liquid sensor, or the combination of two or more of said sensors, and comparing such data with a predetermined value.

16. Method according to claim 15, **characterised in that** controlling, by the control unit, the disconnection of the electronic box (2) from the external part of the container takes place when the value of at least one parameter other than that of acceleration represents a fall of the container.

17. Method according to one of claims 14 to 16, **characterised in that** it comprises a step of determining, by the control unit (4), sabotage of the device and a step of controlling, by the control unit (4), the sending of alarm information.
